# EUROPEAN PATENT SPECIFICATION

(11) **EP 2 411 663 B1**
(45) Date of publication and mention of the grant of the patent: **21.02.2018**
(21) Application number: 10755490.9
(22) Date of filing: 24.03.2010
(51) Int. Cl.: F03B 13/18, F03B 13/14, E02B 9/08

(54) **METHOD FOR INSTALLING AND SERVICING AN APPARATUS RECOVERING THE KINETIC ENERGY OF WATER, AND AN APPARATUS RECOVERING THE KINETIC ENERGY OF WATER**
VERFAHREN ZUR INSTALLIERUNG UND WARTUNG EINES GERÄTS ZUR RÜCKGEWINNUNG DER KINETISCHEN ENERGIE VON WASSER SOWIE GERÄT ZUR RÜCKGEWINNUNG DER KINETISCHEN ENERGIE VON WASSER
PROCÉDÉ D'INSTALLATION ET DE MAINTENANCE D'UN DISPOSITIF RÉCUPÉRANT L'ÉNERGIE CINÉTIQUE DE L'EAU, ET DISPOSITIF RÉCUPÉRANT L'ÉNERGIE CINÉTIQUE DE L'EAU

(30) Priority: 26.03.2009 US 411785
(43) Date of publication of application: 01.02.2012
(73) Proprietor: AW-Energy Oy, 01730 Vantaa (FI)
(72) Inventor: KOIVUSAARI, Rauno, FI-45610 Koria (FI); TUOKKOLA, Yrjö, FI-00650 Helsinki (FI); JÄRVINEN, Arvo, FI-01230 Vantaa (FI); LILJELUND, John, FI-00100 Helsinki (FI); VUORINEN, Matti, FI-02210 Espoo (FI); KASANEN, Erkki, FI-00670 Helsinki (FI); SAVOLAINEN, Jorma, FI-10210 Inkoo (FI); MIETTINEN, Pekka, FI-02210 Espoo (FI)
(74) Representative: Salomäki, Juha Kari Ensio
(86) International application number: PCT/FI2010/050232
(87) International publication number: WO 2010/109074

(56) References cited:
- WO-A1-03/046375
- WO-A1-2004/007953
- WO-A1-2004/097212
- WO-A1-2004/097212
- WO-A1-2005/071258
- WO-A1-2006/100436
- WO-A1-2007/125156
- WO-A1-2007/125156
- WO-A2-2008/138336
- US-A- 4 624 645
- US-B1- 6 935 808

## Description

The present invention relates to a method as defined in the preamble of claim 1 for installing and servicing an apparatus recovering the kinetic energy of water and an apparatus as defined in the preamble of claim 6 for recovering the kinetic energy of water.
The apparatus according to the invention is suited very well for instance for an apparatus for recovering wave energy or tidal energy of seawater. The recovered energy is further converted for instance to electric energy and/or fresh water. In the following only the apparatus for recovering wave energy is dealt with a more precise way.

In the wave energy recovery solutions according to the prior art each recovery unit is usually situated separately on its own base on the bottom of the water basin, such as the bottom of sea. The base for each recovery unit has been made ready on the sea bottom before the installation of the recovery unit. The manufacture of that kind of the base at the sea bottom is slow, requires a lot of preparations, contains a lot of expensive diving labor, and needs a lot of various fixtures. In addition in order to install the recovery unit onto the said base heavy vessel and crane fixtures are required. However, that kind of heavy fixtures is usually not easily available for just the time it is needed. For that reason the prior art solutions suffer from extensive installation costs and a slow installation work. In addition one problem is the inconvenience involved with the maintenance or servicing. The maintenance work requires also a lot of preparation work and heavy vessel and crane fixtures in order to lift the recovery unit onto the surface of the water and to perform the service needed. Also after the service works the same heavy fixtures are needed again. This is slow and makes the service works very expensive.

WO03/046375 discloses an apparatus for recovering the kinetic energy of water mounted on floats which contain tanks that can be flooded, hence allowing the apparatus to be submerged and refloated. The object of the present invention is to eliminate the drawbacks described above and to achieve an inexpensive, easy and a fast method for installing and servicing an apparatus recovering the kinetic energy of water. Likewise the object of the present invention is to achieve an apparatus for recovering the kinetic energy of water. The method of the invention is characterized by what is presented in the characterization part of claim 1, and the apparatus of the invention is characterized by what is presented in the characterization part of claim 4. Other embodiments of the invention are characterized by what is presented in the other claims.
The solution of the invention has the advantage that by using the solution for instance the apparatus for recovering wave energy of seawater can be installed and serviced more easily, faster and with smaller costs than with solutions according to prior art. In the solution according to the invention the heavy vessels with big cranes are not needed, but the apparatus can be installed and lifted for servicing or repairing by the help of small fixtures, for example by the help of a small trawler. Likewise the preparation work for the installation and servicing or repairing is much faster and easier in the solution according to the invention. One advantage is also the fact that in easy cases the servicing or repairing can be made at sea, only by lifting the apparatus onto the surface of the water and making the work on the surface. The lifting of the apparatus takes only about one hour. After the servicing or repairing the apparatus is descended back onto to the sea bottom. In addition one advantage is that because the body of the apparatus is made of concrete it does not rust. One advantage is also the fact that a heavy concrete body protects the components of the apparatus from water and external elements of danger. A further advantage is that thanks to the modular structure separate apparatuses are easy to couple together for a big power plant, and the servicing can be made for instance so that a new or newly serviced apparatus module is brought to the production site at the sea and the old one is replaced with the new one and is towed to the dockyard for servicing or repairing. The exchange of the apparatus module is fast to do and does not require heavy fixtures. One more advantage is that it is easy to integrate various measuring instruments into the body of the apparatus module.

In the following, the invention will be described in detail by the aid of an example by referring to the attached simplified and diagrammatic drawings, wherein
- Fig. 1: presents an apparatus module according to the invention seen obliquely in top view,
- Fig. 2: presents diagrammatically and simplified a body of an apparatus module according to the invention the cover removed and seen in top view,
- Fig. 3: presents diagrammatically and simplified an apparatus module according to the invention seen in side view and in a lengthwise intersection, and cut in the middle,
- Fig. 4: presents diagrammatically and simplified an apparatus module according to the invention seen from the end and in a cross section,
- Fig. 5: presents an apparatus module according to the invention seen in side view at the beginning of an installation phase,
- Fig. 6: presents an apparatus module according to Fig. 5 seen in side view during the installation phase,
- Fig. 7: presents an apparatus module according to Fig. 5 seen in side view installed on the bottom of the water basin,
- Fig. 8: presents an apparatus module according to Fig. 5 seen in side view on the bottom of the water basin and at the beginning of the lifting phase,
- Fig. 9: presents an apparatus module according to Fig. 5 seen in side view during the lifting phase, and
- Fig. 10: presents an apparatus module according to Fig. 5 seen in side view after the lifting and ready for towing.

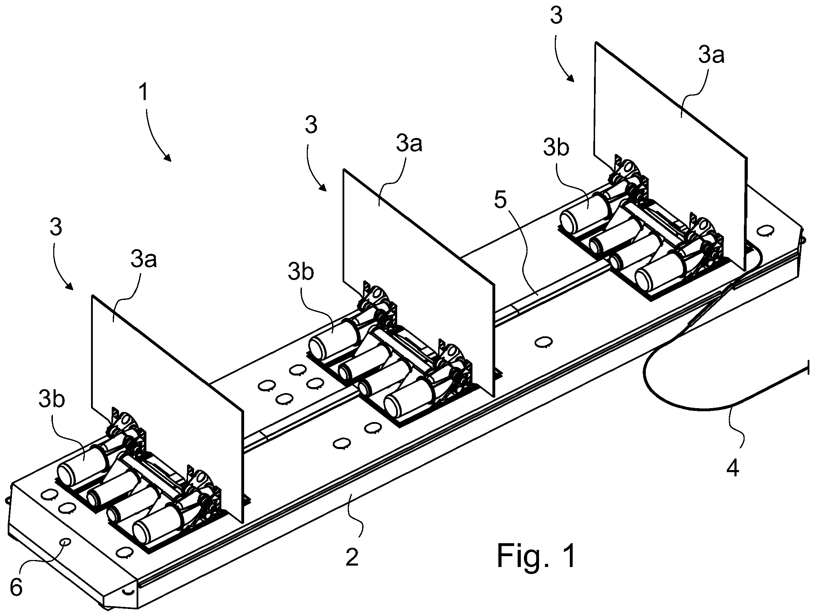

Fig. 1 presents an apparatus module 1 according to the invention for recovering kinetic energy of seawater. The apparatus module 1 according to the example is situated in a so-called intermediate water area of the water basin, and is capable to recover kinetic energy of the waves of the sea and convert the kinetic energy into electric energy. Likewise the apparatus module 1 is capable to make fresh water from the seawater.

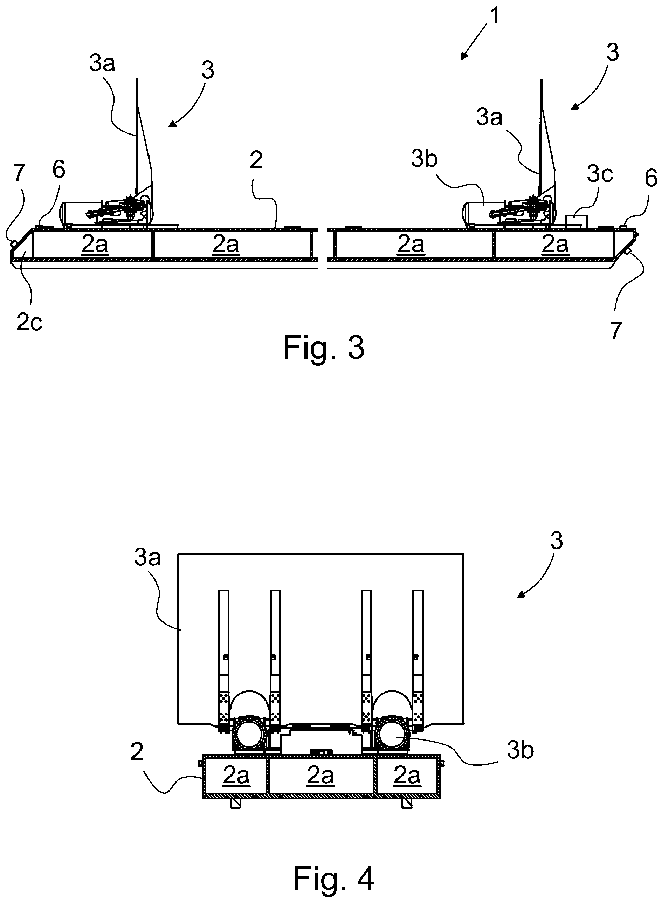

The apparatus module 1 comprises at least a body 2 that functions as a base, two or more onto the body 2 attached recovery units 3 for recovering wave energy, collecting means 3c (shown in Fig. 3) for collecting the energy recovered by the recovery units 3, a cable 4 for transferring the collected energy to further use, and a cable trough 5 equipped with a protective cover for joining all the recovery units 3 of the apparatus module 1 at least into the collecting means 3c.

Each recovery unit 3 comprises at least a plate like wing element 3a that is hinged at its lower edge onto the body 2 of the apparatus module 1, and the recovering means 3b of the wave energy. The wing element 3a is arranged to make reciprocating motion caused by the kinetic energy of the waves, and the recovered energy is either saved into the energy storages situated in the body 2 or transferred through the collecting means 3c and cable 4 to the use of the next unit that can be for instance a collecting station situated on shore. The fresh water produced by the apparatus module 1 can be stored in containers situated in the body 2 of the apparatus module 1, and delivered time to time for further use.

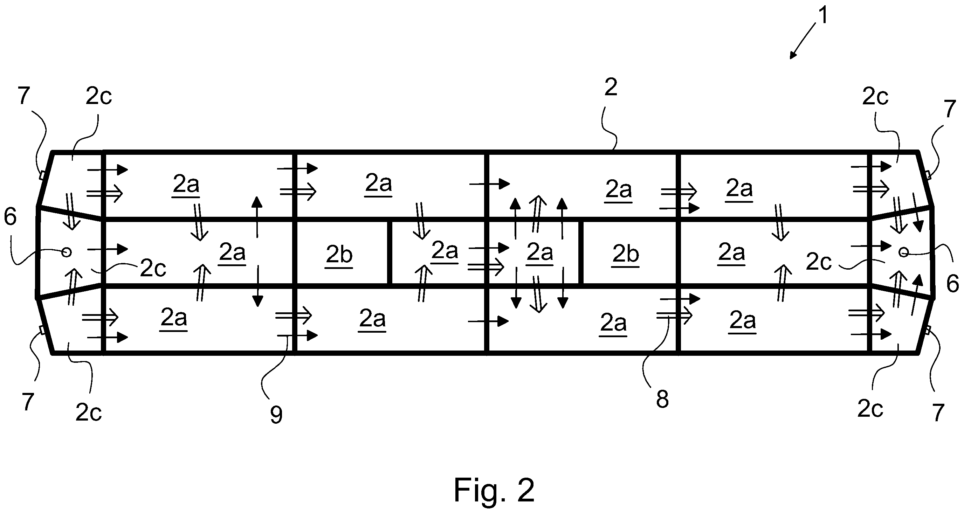

Fig. 2 presents the body 2 of the apparatus module 1 according to the invention seen in top view. In the figure the cover of the body 2 has been removed. The body 2 is made of concrete. It is either assembled of prefabricated cavity slabs or made by casting. The body 2 consists of a group of floating compartments 2a that are arranged one after the other in three parallel rows. The body 2 has also instrument and machinery chambers 2b that are kept dry, and valve compartments 2c at both ends of the body 2. In the valve compartments 2c there are filling and discharge valves 6 for air and filling and discharge valves 7 for water. Water pipes 8 and air pipes 9 has been installed to go through the separation walls of the compartments 2a and 2c in order to allow water and air to run into all the floating compartments 2a and valve compartments 2c. In addition the ends of the body 2 have been reinforced in order to stand the body 2 hitting the sea bottom 12 when the apparatus module 1 is descended into the bottom of the water basin. Thanks to its heavy concrete structure the apparatus module 1 remains steady on the sea bottom 12 when the floating compartments 2a are filled with water. Correspondingly floating compartments 2a are big enough to allow the body 2 to float on the surface of the water when the floating compartments 2a are filled with air.

In Fig. 3 and 4 the apparatus according to the invention is shown separately from its neighborhood. In Fig. 3 the apparatus is shown in a lengthwise intersection and cut in the middle so that only two recovery units 3 are seen. The filling and discharge valves 6 for air and the filling and discharge valves 7 for water are seen at the both ends of the body 2. In Fig. 4 the apparatus according to the invention is shown in a cross section.

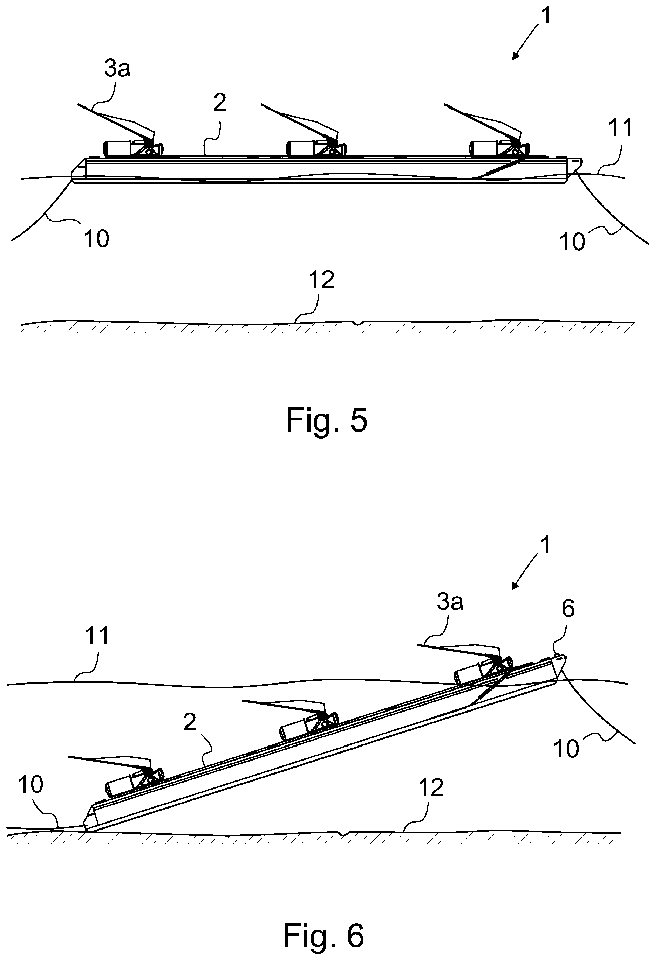

Figs. 5-10 show the steps of the method according to the invention for installing the apparatus module 1 recovering kinetic energy from the seawater into its production site, and for lifting the apparatus module 1 back onto the surface of the water for instance for servicing or repairing.

The apparatus module 1 according to the invention is intended to be descended into its production site onto the sea bottom 12 at the area situated in a so-called intermediate water area of the water basin. The intermediate water area refers here to the same area as in the WO publication No. WO2004097212, i.e. to the water basin area, generally ocean area in the depth range of the so-called breaker-line and shallow waters, extending to the wavelength of 0,5. In the intermediate water area the relation of the water depth to the principally prevailing wavelengths is between 1/2 - 1/20.

At the beginning of the installation the apparatus module 1 pre-assembled in the dockyard or onshore is towed floating and the wing elements 3a of the recovery units 3 turned down to a transporting position to the installation site that is marked with buoys that support the free ends of the anchor chains 10 that are anchored at the sea bottom 12. The towing can be done with a small trawler or boat. There are for instance one or two anchor chains 10 for each end of the apparatus module 1.

When the apparatus module 1 is floating above its production site it is fastened with its both ends into the free ends of the anchor chains 10 and the chains 10 are tightened. The descending of the apparatus module 1 from the surface 11 onto the sea bottom 12 can be done in many various ways, but the main idea is to keep the apparatus module 1 steady at the sea bottom 12 by the help of its own mass and the mass of the water filled into the compartments 2a and 2c, and making the apparatus module 1 floating by the help of gas, such like air that is blown to the compartments 2a and 2c to replace the water.

One way to descend the apparatus module 1 onto the sea bottom 12 is to open the filling valves 7 for water and to stretch the apparatus module 1 towards the sea bottom 12 with the anchor chains 10. During the stretching water runs into the compartments 2a and 2c and the apparatus module 1 begins to descend more and more easily towards the sea bottom 12.

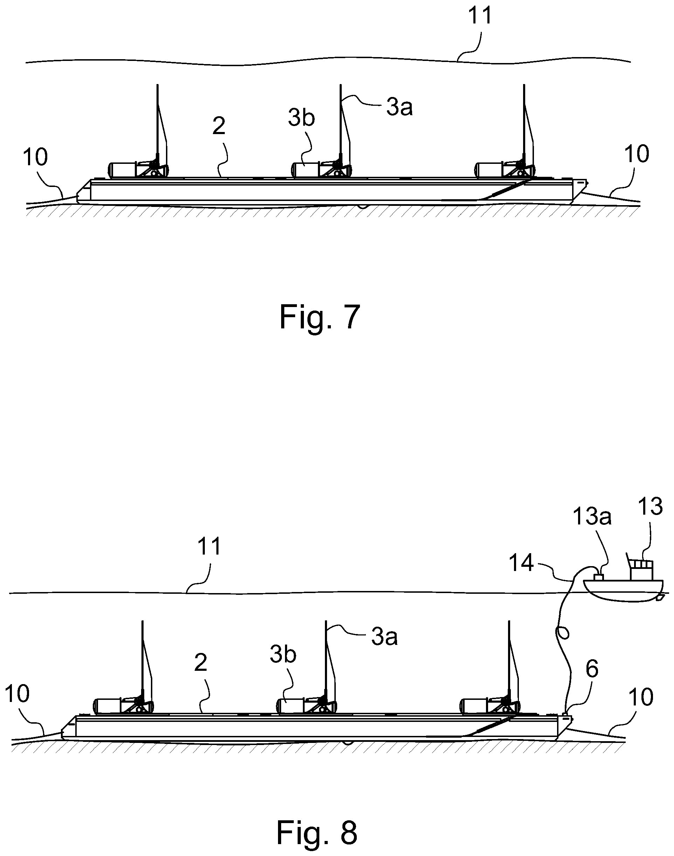

Another way is shown in Fig. 6. Here the method is conducted so that at the beginning the filling valves 7 for water at the first end of the apparatus module 1 are opened, and the body 2 is allowed to be filled with water starting from the first end of the apparatus module 1. In this way the first end of the apparatus module 1 descends first onto the sea bottom 12 as is shown in Fig. 6. In this phase or suitably already somewhat earlier also the filling valves 7 for water at the second end of the apparatus module 1 are opened so that also the second end of the apparatus module 1 is filled quicker with water, and the apparatus module 1 descends onto the sea bottom 12 as is shown in Fig. 7. At the same time the filling and discharge valves 6 for air is opened at the second end of the apparatus module 1 in order to allow the air come out from the compartments 2a and 2c. The anchor chains 10 are used to guide the apparatus module 1 to descend precisely onto its production location. When the apparatus module 1 is at its location at the sea bottom 12, and when all the air has left the compartments 2a and 2c, all valves 6 and 7 are closed and the apparatus module 1 is fastened steadily at its production site by the aid of the anchor chains 10.

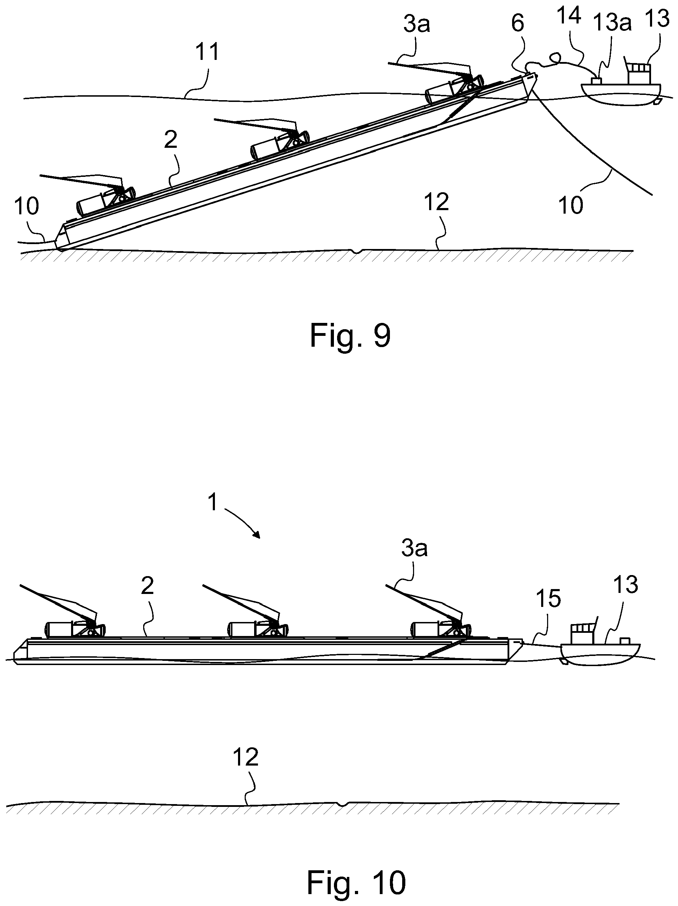

Fig. 8 shows the initial phase of the lifting of the apparatus module 1. At the beginning of the lifting phase the wing elements 3a of the recovery units 3 are turned down to their transporting position and a compressor 13a situated in the trawler 13 is coupled by the help of an air hose 14 into the filling and discharge valve 6 for air located at the second end of the apparatus module 1. At the same time the filling and discharge valve 6 for air located at the first end of the apparatus module 1 is opened in order to allow the water come out from the compartments 2a and 2c. Air is filled into the body 2 until the second end of the body 2 is filled with the air and lifts up to the surface of the water 11. After that the air pumping is continued until also the first end of the body 2 lifts up to the surface of the water 11. When the body 2 is totally on the surface and is floating the open valves 6 are closed and the apparatus module 1 is released from the anchor chains 10, the free ends of which are equipped with buoys as marks. After that the towing rope 15 can be coupled to the body 2 and the apparatus module 1 is towed with a trawler 13 to the dockyard for servicing as shown in Fig. 10.

Alternatively the servicing can be made also on the production site when the body 2 is floating on the surface of the water, if the tasks required make it possible. In addition it can be done so that when the trawler 13 comes to fetch the apparatus module 1 for servicing it brings at the same time a new or a newly serviced apparatus module 1 that is installed to replace the apparatus module 1 that has been lifted up for the service or repairing. In this way the operation of the wave energy power plant consisting of a plurality of apparatus modules 1 suffers extremely little during the service break of an apparatus module 1.
It is obvious to the person skilled in the art that the invention is not restricted to the example described above but that it may be varied within the scope of the claims presented below.

It is also obvious to the person skilled in the art that the apparatus module can differ from the apparatus module described above. The apparatus module may have a different number of wave energy recovery units than is presented in the example above. For instance the number of wave energy recovery units can be 2, 4, 5 or 6 or even more.
In addition it is obvious to the person skilled in the art that the apparatus module can be also made for recovering tidal energy, and the apparatus module can be sunk also into a deeper water than a so called intermediate water.
Further it is obvious to the person skilled in the art that instead of only concrete the body of the apparatus module can be made of steel or a combination of concrete and steel, or of another suitable material.

## Claims

1. Method for installing and servicing an apparatus recovering the kinetic energy of water, in which method the apparatus is installed at the bottom (12) of a water basin, such as a sea, in which method an apparatus module (1) is created consisting of at least a floating body (2) equipped with compartments (2a, 2c) to be filled with gas, such as air, and with water; and two or more recovery units (3) for recovering kinetic energy of water, the recovery units (3) being attached at the body (2), and the apparatus module (1) carrying the recovery units (3) is towed floating to its production site and descended onto the bottom (12) of the water basin by allowing the water run into the compartments (2a and 2c) so that the body (2) draws at the same time the recovery units (3) into their production site, **characterized in that** the method comprises at least the following steps:
- when descending the apparatus module (1) onto the bottom (12) of the water basin the water is allowed to run into the compartments (2a and 2c) of the body (2) starting at one end of the body (2) first and the other end thereafter so that the body (2) with recovery units (3) is descended to the bottom (12) of the water basin by descending said one end of the body (2) first and the other end thereafter so that the body (2) draws at the same time the recovery units (3) into their production site, and serves as a base for the recovery units (3), wherein said base remains at the bottom (12) of the water basin due to gravitational force; and
- when lifting the apparatus module (1) from the bottom (12) of the water basin gas, such as air, is pumped into the compartments (2a, 2c) of the body (2) starting at one end of the body (2) first and the other end thereafter so that the body (2) with the recovery units (3) is lifted up to the surface (11) of the water by lifting said one end of the body (2) first and the other end thereafter.

2. Method as defined in claim 1, **characterized in that** the method comprises the steps where the service and/or repairing of recovery units (3) is fulfilled so that the body (2) with the recovery units (3) is lifted up to the surface (11) of the water, and if possible the service and/or repairing tasks are made on the production site on the surface (11) of the water, or the apparatus module (1) is transported to a dockyard or a corresponding site and the service and/or repairing tasks are made there.

3. Method as defined in claim 1 or 2, **characterized in that** the method comprises at least a step where the apparatus module (1) is descended into its production site in the intermediate water area of the water basin at the depth where the relation of the water depth to the principally prevailing wavelengths is between 1/2 - 1/20.

4. An apparatus for recovering the kinetic energy of water, which apparatus comprises at least two or more recovery units (3) for recovering kinetic energy of water and a body (2) carrying the recovery units (3), and which apparatus is configured to be installed at the bottom (12) of a water basin, such as a sea, in which apparatus the body (2) equipped with filling and discharge valves (6) for gas, such as air and filling and discharge valves (7) for water and compartments (2a, 2c) to be filled with gas, such as air, and with water, is acting as a base; and two or more recovery units (3) are attached at the body (2) to form together a floatable apparatus module (1), **characterized in that** for descending the apparatus module (1) the filling and discharge valves (7) for filling the compartments (2a, 2c) with water are arranged to be opened at one end of the body (2) first, and at the other end thereafter; and for lifting the apparatus module (1) from the bottom (12) of the water basin the filling and discharge valves (6) for filling the compartments (2a, 2c) with gas, such as air, are arranged to be opened at one end of the body (2) first, and at the other end thereafter.

5. An apparatus according to claim 4, **characterized in that** the filling and discharge valves (6) for gas, such as air and the filling and discharge valves (7) for water are located at both ends of the body (2).

6. An apparatus according to claim 4 or 5, **characterized in that** the apparatus comprises collecting means (3c) in the body (2) for collecting the energy recovered by the recovery units (3); and a cable (4) for delivering the energy recovered by the recovery units (3) for further use; and the body (2) has a cable trough (5) equipped with a protective cover for joining all the recovery units (3) of the apparatus module (1) at least into the collecting means (3c).

7. An apparatus according to claim 4, 5 or 6, **characterized in that** the apparatus module (1) is fitted to be descended into its production site in the intermediate water area of the water basin at the depth where the relation of the water depth to the principally prevailing wavelengths is between 1/2 - 1/20, and where the recovery units (3) of the kinetic energy have wing elements (3a) that are arranged to make reciprocating motion caused by the kinetic energy of the waves for recovering the kinetic energy in the intermediate water area of the water basin.

8. An apparatus according to one of the preceding claims, **characterized in that** the body (2) has been made mainly of concrete, for instance the body (2) is assembled of prefabricated cavity slabs or made by casting.

9. An apparatus according one of the preceding claims, **characterized in that** the number of recovery units (3) attached onto the body (2) is from 2 to 6, advantageously from 3 to 4.

## Patentansprüche

1. Verfahren zum Installieren und Warten einer die kinetische Energie von Wasser zurückgewinnenden Vorrichtung, wobei in dem Verfahren die Vorrichtung an dem Boden (12) eines Wasserbeckens, wie zum Beispiel einem Meer, installiert wird, wobei in dem Verfahren ein Vorrichtungsmodul (1) erzeugt wird, das aus zumindest einem Schwimmkörper (2), der mit Fächern (2a, 2c) ausgestattet ist, die mit Gas, wie zum Beispiel Luft, und mit Wasser zu füllen sind; und zwei oder mehr Rückgewinnungseinheiten (3) zur Rückgewinnung kinetischer Energie von Wasser besteht, wobei die Rückgewinnungseinheiten (3) an dem Körper (2) angebracht sind, und das die Rückgewinnungseinheiten (3) tragende Vorrichtungsmodul (1) schwimmend zu seiner Produktionsstätte geschleppt und auf den Boden (12) des Wasserbeckens abgesenkt wird durch Gestatten des Wassers, in die Fächer (2a und 2c) zu laufen, so dass der Körper (2) zur gleichen Zeit die Rückgewinnungseinheiten (3) in ihre Produktionsstätte zieht, **dadurch gekennzeichnet, dass** das Verfahren zumindest die folgenden Schritte umfasst:
- wenn das Vorrichtungsmodul (1) auf den Boden (12) des Wasserbeckens abgesenkt wird, wird es dem Wasser gestattet, in die Fächer (2a und 2c) des Körpers (2) zu laufen, beginnend zuerst an einem Ende des Körpers (2) und danach an dem anderen Ende, so dass der Körper (2) mit den Rückgewinnungseinheiten (3) zu dem Boden (12) des Wasserbeckens abgesenkt wird durch Absenken des einen Endes des Körpers (2) zuerst und des anderen Endes danach, so dass der Körper (2) zur gleichen Zeit die Rückgewinnungseinheiten (3) in ihre Produktionsstätte zieht, und als Basis für die Rückgewinnungseinheiten (3) dient, wobei die besagte Basis an dem Boden (12) des Wasserbeckens aufgrund der Schwerkraft verbleibt; und
- wenn das Vorrichtungsmodul (1) von dem Boden (12) des Wasserbeckens angehoben wird, wird Gas, wie zum Beispiel Luft, in die Fächer (2a, 2c) des Körpers (2) gepumpt, beginnend zuerst an einem Ende des Körpers (2) und danach an dem anderen Ende, so dass der Körper (2) mit den Rückgewinnungseinheiten (3) an die Oberfläche (11) des Wassers angehoben wird durch Anheben des besagten einen Endes des Körpers (2) zuerst und des anderen Endes danach.

2. Verfahren wie in Anspruch 1 definiert, **dadurch gekennzeichnet, dass** das Verfahren die Schritte umfasst, in denen die Wartung und/oder das Reparieren von Rückgewinnungseinheiten (3) vollzogen wird, so dass der Körper (2) mit den Rückgewinnungseinheiten (3) an die Oberfläche (11) des Wassers angehoben wird, und wenn möglich die Wartung und/oder die Reparaturaufgaben an der Produktionsstätte auf der Oberfläche (11) des Wassers durchgeführt werden, oder das Vorrichtungsmodul (1) zu einer Werft oder einer entsprechenden Stätte transportiert wird und die Wartung und / oder Reparaturaufgaben dort durchgeführt werden.

3. Verfahren wie in Anspruch 1 oder 2 definiert, **dadurch gekennzeichnet, dass** das Verfahren zumindest einen Schritt umfasst, in dem das Vorrichtungsmodul (1) in seine Produktionsstätte abgesenkt wird in den mittleren Wasserbereich des Wasserbeckens in der Tiefe, in der die Beziehung der Wassertiefe zu den prinzipiell vorherrschenden Wellenlängen zwischen 1/2 und 1/20 liegt.

4. Eine Vorrichtung zur Rückgewinnung der kinetischen Energie von Wasser, wobei die Vorrichtung zumindest zwei oder mehr Rückgewinnungseinheiten (3) zur Rückgewinnung kinetischer Energie von Wasser und einen Körper (2) umfasst, der die Rückgewinnungseinheiten (3) trägt, und wobei die Vorrichtung konfiguriert ist, an dem Boden (12) eines Wasserbeckens, wie zum Beispiel eines Meeres, installiert zu sein, wobei in der Vorrichtung der Körper (2), der mit Füll - und Ablassventilen (6) für Gas, wie zum Beispiel Luft, und Füll- und Ablassventilen (7) für Wasser und Fächern (2a, 2c), die mit Gas, wie zum Beispiel Luft, und mit Wasser zu füllen sind, ausgestattet ist, als eine Basis wirkt; und zwei oder mehr Rückgewinnungseinheiten (3) an dem Körper (2) angebracht sind, um zusammen eine schwimmfähige Vorrichtungsmodul (1) zu bilden, **dadurch gekennzeichnet, dass** zum Absenken des Vorrichtungsmoduls (1) die Füll- und Ablassventile (7) zum Füllen der Fächer (2a, 2c) mit Wasser eingerichtet sind, um zuerst an einem Ende des Körpers (2), und danach an dem anderen Ende geöffnet zu werden; und zum Anheben des Vorrichtungsmoduls (1) von dem Boden (12) des Wassersbeckens die Füll- und Ablassventile (6) zum Füllen der Fächer (2a, 2c) mit Gas, wie zum Beispiel Luft, eingerichtet sind, um zuerst an einem Ende des Körpers (2), und danach an dem anderen Ende geöffnet werden.

5. Vorrichtung gemäß Anspruch 4, **dadurch gekennzeichnet, dass** die Füll- und Ablassventile (6) für Gas, wie zum Beispiel Luft, und die Füll- und Ablassventile (7) für Wasser an beiden Enden des Körpers (2) angeordnet sind.

6. Vorrichtung gemäß Anspruch 4 oder 5, **dadurch gekennzeichnet, dass** die Vorrichtung ein Sammelmittel (3c) in dem Körper (2) zum Sammeln der durch die Rückgewinnungseinheiten (3) rückgewonnenen Energie umfasst; und ein Kabel (4) zum Liefern der durch die Rückgewinnungseinheiten (3) rückgewonnenen Energie zur weiteren Verwendung; und der Körper (2) eine Kabelwanne (5) aufweist, die mit einer Schutzabdeckung zum Verbinden aller der Rückgewinnungseinheiten (3) des Vorrichtungsmoduls (1) zumindest in das Sammelmittel (3c) hinein ausgestattet ist.

7. Vorrichtung gemäß Anspruch 4, 5 oder 6, **dadurch gekennzeichnet, dass** das Vorrichtungsmodul (1) eingerichtet ist, um in seine Produktionsstätte in den mittleren Wasserbereich des Wasserbeckens in der Tiefe abgesenkt zu werden, in der die Beziehung der Wassertiefe zu den prinzipiell vorherrschenden Wellenlängen zwischen 1/2 und 1/20 liegt, und wobei die Rückgewinnungseinheiten (3) der kinetischen Energie Flügelelemente (3a) aufweisen, die eingerichtet sind, um eine durch die kinetische Energie der Wellen verursachte Hin- und Herbewegung zur Rückgewinnung der kinetischen Energie in dem mittleren Wasserbereich des Wasserbeckens durchzuführen.

8. Vorrichtung gemäß einem der vorhergehenden Ansprüche, **dadurch gekennzeichnet, dass** der Körper (2) hauptsächlich aus Beton hergestellt worden ist, zum Beispiel ist der Körper (2) aus vorgefertigten Hohlraumplatten zusammengebaut oder durch Gießen hergestellt

9. Vorrichtung gemäß einem der vorhergehenden Ansprüche, **dadurch gekennzeichnet, dass** die Anzahl der an dem Körper (2) angebrachten Rückgewinnungseinheiten (3) von 2 zu 6, vorteilhaft von 3 bis 4, beträgt.

## Revendications

1. Procédé pour installer et à entretenir un appareil qui récupère l'énergie cinétique de l'eau, procédé dans lequel l'appareil est installé au fond (12) d'un bassin d'eau, comme une mer, procédé dans lequel un module d'appareil (1) est créé qui consiste en au moins un corps flottant (2) équipé de compartiments (2a, 2c) destinés à être remplis avec un gaz, comme de l'air, et avec de l'eau ; et deux ou plusieurs unités de récupération (3) pour récupérer l'énergie cinétique de l'eau, les unités de récupération (3) étant attachées sur le corps (2), et le module d'appareil (1) portant les unités de récupération (3) est remorqué en flottant jusqu'à son site de production et est descendu jusque sur le fond du bassin d'eau en permettant à l'eau d'entrer dans les compartiments (2a et 2c) de sorte que le corps (2) tire en même temps les unités de récupération (3) jusqu'à leur site de production, **caractérisé en ce que** le procédé comprend au moins les étapes suivantes :
- lors de la descente du module l'appareil (1) jusqu'au fond (12) du bassin d'eau, l'eau est autorisée à entrer dans les compartiments (2a et 2c) du corps (2) en commençant en premier à une extrémité du corps (2) et ensuite à l'autre extrémité de telle sorte que le corps (2) avec les unités de récupération (3) est descendu jusqu'au fond (12) du bassin d'eau en faisant descendre ladite première extrémité du corps (2) en premier et l'autre extrémité ensuite, de sorte que le corps (2) tire en même temps les unités de récupération (3) jusqu'à leur site de production, et sert de base pour les unités de récupération (3), dans lequel ladite base reste au fond (12) du bassin d'eau en raison de la force de gravitation ; et
- lors du levage du module l'appareil (1) depuis le fond (12) du bassin d'eau, un gaz tel que de l'air est pompé jusque dans les compartiments (2a, 2c) du corps en commençant à une extrémité du corps (2) en premier et à l'autre extrémité ensuite, de sorte que le corps (2) avec les unités de récupération (3) est levé jusqu'à la surface (11) de l'eau en levant ladite première extrémité du corps (2) en premier et l'autre extrémité ensuite.

2. Procédé selon la revendication 1, **caractérisé en ce que** le procédé comprend les étapes selon lesquelles l'entretien et/ou la réparation des unités de récupération (3) est assuré de telle façon que le corps (2) avec les unités de récupération (3) est levé jusqu'à la surface (11) de l'eau et, si possible, les tâches d'entretien et/ou de réparation sont effectuées sur le site de production sur la surface (11) de l'eau, ou bien le module d'appareil (2) est transportée à un chantier naval ou un site correspondant et les tâches d'entretien et/ou de réparation sont effectuées à cet endroit.

3. Procédé selon la revendication 1 ou 2, **caractérisé en ce que** le procédé comprend au moins une étape dans laquelle le module l'appareil (1) est descendu jusqu'à son site de production dans la zone d'eau intermédiaire du bassin d'eau à la profondeur à laquelle la relation de la profondeur de l'eau sur les longueurs de vagues qui règnent principalement est entre 1/2 et 1/20.

4. Appareil pour récupérer l'énergie cinétique de l'eau, ledit appareil comprenant au moins deux ou plusieurs unités de récupération (3) pour récupérer l'énergie cinétique de l'eau et un corps (2) qui porte les unités de récupération (3), et ledit appareil est configuré pour être installé au fond (12) d'un bassin d'eau, comme une mer, appareil dans lequel le corps (2) équipé de valves de remplissage et de décharge (6) pour un gaz, comme de l'air, et de valves de remplissage et de décharge (7) pour de l'eau, et des compartiments (2a, 2c) destinés à être remplis avec un gaz, comme de l'air, et avec de l'eau, fait office de base ; et deux ou plusieurs unités de récupération (3) sont attachées sur le corps (2) pour former ensemble un module d'appareil capable de flotter (1), **caractérisé en ce que** pour descendre le module l'appareil (1), les valves de remplissage et de décharge (7) pour remplir les compartiments (2a, 2c) avec de l'eau sont agencées pour être ouvertes à une extrémité du corps (2) en premier, et ensuite à l'autre extrémité ; et pour lever le module d'appareil (1) depuis le fond (12) du bassin d'eau, les valves de remplissage et de décharge (6) pour remplir les compartiments (2a, 2c) avec un gaz, comme de l'air, sont agencées pour être ouvertes à une extrémité du corps (2) en premier et à l'autre extrémité ensuite.

5. Appareil selon la revendication 4, **caractérisé en ce que** les valves de remplissage et de décharge (6) pour un gaz, comme de l'air, et les valves de remplissage et de décharge (7) pour de l'eau sont situées aux deux extrémités du corps (2).

6. Appareil selon la revendication 4 ou 5, **caractérisé en ce que** l'appareil comprend des moyens de collecte (3c) dans le corps (2) pour collecter l'énergie récupérée par les unités de récupération (3) ; et un câble (4) pour distribuer l'énergie récupérée par l'unité de récupération (3) pour son utilisation par ailleurs ; et le corps (2) comporte une trémie à câble (5) équipée d'une couverture protectrice pour réunir toutes les unités de récupération (3) du module d'appareil (1) au moins jusque dans les moyens de collecte (3c).

7. Appareil selon la revendication 4, 5 ou 6, **caractérisé en ce que** le module d'appareil (1) est agencé pour être descendu jusqu'à son site de production dans la zone d'eau intermédiaire du bassin d'eau à une profondeur à laquelle la relation de la profondeur de l'eau sur les longueurs de vagues qui règnent principalement est entre 1/2 et 1/20, et dans lequel les unités de récupération (3) de l'énergie cinétique ont des éléments en forme d'ailes (3a) qui sont agencées pour faire un mouvement de va-et-vient provoqué par l'énergie cinétique des vagues pour récupérer l'énergie cinétique dans la zone d'eau intermédiaire du bassin d'eau.

8. Appareil selon l'une des revendications précédentes, **caractérisé en ce que** le corps (2) est réalisé principalement en ciment, par exemple le corps (2) est assemblé à partir de poutres préfabriquées avec des cavités, ou réalisé par coulée.

9. Appareil selon l'une des revendications précédentes, **caractérisé en ce que** le nombre d'unités de récupération (3) attachées sur le corps (2) est de 2 à 6, avantageusement de 3 à 4.
